# EUROPEAN PATENT SPECIFICATION

(11) **EP 4 023 992 B1**
(45) Date of publication and mention of the grant of the patent: **30.10.2024**
(21) Application number: 21217042.7
(22) Date of filing: 22.12.2021
(51) Int. Cl.: F28D 9/00, F28F 21/08

(54) **HEAT EXCHANGER**
WÄRMETAUSCHER
ÉCHANGEUR DE CHALEUR

(30) Priority: 29.12.2020 CN 202011603838; 29.12.2020 CN 202023278450 U
(43) Date of publication of application: 06.07.2022
(73) Proprietor: Modine Manufacturing Company, Racine, Wisconsin 53403-2552 (US)
(72) Inventor: WANG, Tiebin, Racine, Wisconsin 53403-2552 (US); ZHOU, Quan, Racine, Wisconsin 53403-2552 (US); WANG, Ping, Racine, Wisconsin 53403-2552 (US); GE, Xiaodong, Racine, Wisconsin 53403-2552 (US); NIE, Junchu, Racine, Wisconsin 53403-2552 (US)
(74) Representative: Marks & Clerk LLP

(56) References cited:
- EP-A1- 0 671 240
- EP-A1- 1 153 690
- EP-A1- 3 078 929
- EP-A2- 1 094 291

## Description

### BACKGROUND

The present disclosure relates to heat exchangers and a method of manufacturing heat exchangers.

EP3078929 discloses a method of producing a heat exchanger, comprising: obtaining a titanium plate that has been cladded with a melting depressant foil, and heat treated for improving ductile properties; pressing a pattern in the titanium plate; stacking the titanium plate on a number of similar titanium plates; heating the stack of titanium plates to a temperature above 850 °C and below the melting point of titanium, the melting depressant foil causing surface layers of the titanium plates to melt and flow to contact points between adjacent titanium plates; and allowing the melted titanium to solidify, such that joints are obtained at the contact points between adjacent titanium plates.

EP1094291 discloses a plate heat exchanger comprising a plate assembly having a plurality of heat transfer plates arranged in a stack formation wherein the plates are spaced apart from each other to define heat transfer medium passages between adjacent heat transfer plates. The plate has a plurality of contact portions. The plate heat exchanger further comprises solder disposed between and joining the contact portions of the adjacent heat transfer plates so as to integrally join the heat transfer plates thereby forming the plate assembly. Selected ones of the heat transfer medium passages allow a first heat transfer medium to flow therethrough and other heat transfer medium passages allow a second heat transfer medium to flow therethrough to thereby enable heat exchange to be effected between the first and second heat transfer media via the heat transfer plates. The solder joins the adjacent heat transfer plates which define the first heat transfer medium passage has characteristics suitable for the first heat transfer medium. The solder joining the adjacent heat transfer plates which define the second heat transfer medium passage has characteristics suitable for the second heat transfer medium.

EP1153690 discloses a method of production of an inexpensive corrosion-resistant heat exchanger made of stainless steel including the steps of electroplating chrome to a thickness of 15 µm on at least one of the end faces of a plurality of first and second shaped plates made of stainless steel alternately stacked in the thickness direction so as to form a chrome-based brazing filler metal layer, then electrolessly plating or electroplating Ni-P to a thickness of 35 µm on the chrome-based brazing filler metal layer to form a nickel-based brazing filler metal layer. The first and second shaped plates are brazed together through the chrome-based brazing filler metal layer and the nickel-based brazing filler metal layer to obtain a high corrosion resistant heat exchanger. Further, a fine metal structure can be realized in the high corrosion resistance brazing filler metal filler and therefore the occurrence of cracking at the grain boundaries of the metal structure can be reduced.

EP0671240 discloses a self-brazing material for use in a heat exchanger using a corrosive heat exchanger fluid is manufactured by providing a first substrate layer and a second layer metallurgically bonding the two layers together to form a composite material. This second layer is made of a material chosen from a group consisting of materials capable of having good high temperature and corrosive properties, and melting at a temperature well below that of the first material. The bonded material is then reacted so as to render the second layer a brazing layer for the first substitute layer with excellent high temperature and corrosive properties.

### SUMMARY

The invention provides a heat exchanger including a first fluid channel in thermal communication with a second fluid channel. The first fluid channel is enclosed being sealed from the second fluid channel and being sealed within the heat exchanger. In particular, the invention provides that the first fluid channel is created between two plates and is sealed by a braze joint between the two plates- the braze joint created, in part, by a copper filler material located specifically at a perimeter of the first fluid channel and contacting perimeter areas of the two plates. Locating the copper filler material specifically in this area prevents or minimizes contact between a first fluid, typically oil, within the first fluid channel and the copper material, which helps to prevent the copper material from diffusing into the first fluid and which can prevent or minimize the copper material from flowing into other parts of a mechanical system, keeping the first fluid cleaner and benefit the mechanical system. To accurately position such copper filler material, the invention further provides that the copper filler material is a foil material and, in particular, a foil braze frame. The braze frame is installed between the two plates at peripheral corners and edges of the two plates, where the two plates nest together.

The first fluid channel of the heat exchanger includes a center flow region within the perimeter of the first fluid channel and between an inlet manifold opening and an outlet manifold opening. The copper braze frame includes a frame base and a frame wall that extends from the frame base at an angle of at least 20 degrees from the base. The frame base includes an inner edge, and the frame wall includes an outer edge. The inner edge surrounds and defines the area of the center flow region. The inner edge extends in parallel to the outer edge along the perimeter of the first fluid channel at locations where the perimeter is adjacent to the center flow region. A width of the center flow region at the widest point of the center flow region is a separation distance between the inner edge on one side of the frame and the inner edge on another opposite side of the frame. The first fluid channel is further defined between a first plate and a second plate, which are brazed to each other at the perimeter of the first fluid channel by the braze frame. A third plate is stacked on the second plate to define a second fluid channel between the second plate and the third plate.

The heat exchanger further includes a first inlet configured to receive the first fluid, a first outlet in fluid communication with the first inlet, a second inlet configured to receive a second fluid that includes a coolant, and a second outlet in fluid communication with the second inlet. The first fluid channel provides fluid communication of the first fluid between the first inlet and the first outlet. The second fluid channel provides fluid communication of the second fluid between the second inlet and the second outlet. A turbulator or fin may be located within the first fluid channel to increase the heat transfer between the first fluid and the second fluid. The copper braze frame is located between the first plate and the second plate. Other braze filler materials like braze paste made with iron or other materials may also be used within the first fluid channel, particularly within in the center flow region. Copper or iron based braze filler materials may be used within the second fluid channel.

In another embodiment, the heat exchanger includes a braze foil sheet made with copper, and the braze foil sheet is located within the second fluid channel. The braze foil sheet includes a sheet base that extends through the second fluid channel and a sheet wall that extends from the sheet base at an angle greater that 20 degrees. The sheet wall extends a first height from the sheet base. In the heat exchanger, the braze foil sheet is assembled between the second plate and the third plate. When the heat exchanger is assembled, a first edge at the outer perimeter of the braze foil sheet is located between a second edge at the outer perimeter of the second plate and a third edge at the outer perimeter of the third plate. The braze foil sheet within the second channel functions as a brazing filler material for both the braze joint between the first plate and second plate and the braze joint between the second and third plate, as the braze foil sheet melts while the heat exchanger is heating in a brazing furnace, and the brazing material from the braze foil sheet migrates to the joint between the first plate and the second plate. Iron based braze filler materials may be used within the first fluid channel.

In another embodiment, the invention provides a method of manufacturing a heat exchanger, the method includes providing a first inlet configured to receive a first fluid, providing a first outlet in fluid communication with the first inlet, providing a second inlet configured to receive a second fluid that includes a coolant, providing a second outlet in fluid communication with the second inlet, providing a first plate, stacking a second plate on the first plate to define a first fluid channel between the first plate and the second plate, the first fluid channel providing fluid communication of the first fluid between the first inlet and the first outlet. The method further includes stacking a third plate on the second plate to define a second fluid channel between the second plate and the third plate, the second fluid channel providing fluid communication of the second fluid between the second inlet and the second outlet. The method further includes placing a copper foil frame between the first plate and the second plate such that the copper foil frame extends around a perimeter of the second plate and brazing the first plate to the second plate where the copper foil frame provides a filler metal that couples the first plate to the second plate. For this embodiment and method, frame walls of the copper foil frame are bent at an angle to a frame base of the copper foil frame before openings in the frame base are punched. This element of the process provides rigidity to the frame for the punching process.

According to a first aspect of the invention there is provided a heat exchanger comprising:
a first inlet configured to receive a first fluid;
a first outlet in fluid communication with the first inlet;
a second inlet configured to receive a second fluid that includes a coolant;
a second outlet in fluid communication with the second inlet;
a first plate;
a second plate stacked on the first plate to define a first fluid channel between the first plate and the second plate, the first fluid channel providing fluid communication of the first fluid between the first inlet and the first outlet;
a third plate stacked on the second plate to define a second fluid channel between the second plate and the third plate, the second fluid channel providing fluid communication of the second fluid between the second inlet and the second outlet; and
a copper foil frame between the first plate and the second plate, the copper foil frame configured to provide a filler metal for brazing the first plate to the second plate, wherein the copper frame extends around a perimeter of the second plate.

The first plate may include a base and a dome that extends from the base, wherein the dome includes an aperture extending through the dome, the aperture in fluid communication with the second inlet and the aperture provides a flow path for the second fluid, and wherein the copper foil frame is located between the dome of the first plate and the second plate to provide a filler metal for brazing the dome of first plate to the second plate.

The copper foil frame may extend beyond an outer edge of the second plate and beyond an interface between the second plate and the third plate.

The heat exchanger may further comprise a turbulator in the first fluid channel and an iron braze paste between the turbulator and at least one of the first plate and the second plate for brazing the turbulator to the at least one of the first plate and the second plate.

The copper foil frame may include a frame base with an inner edge, and a frame wall with an outer edge, wherein the inner edge surrounds and defines an area of a center flow region, and wherein the inner edge extends in parallel to the outer edge at least partially around the center flow region.

The copper foil frame may include a frame base, and a frame wall, and wherein the frame wall extends away from the frame base at an angle greater than 20 degrees.

The copper foil frame may include a frame base, and a frame wall, and wherein a width dimension of the frame wall is greater than or equal to a width dimension of the frame base when measured along a cross-section of a side of the copper foil frame.

According to a second aspect of the invention there is provided a method of manufacturing a heat exchanger, the method comprising:
providing a first inlet configured to receive a first fluid;
providing a first outlet in fluid communication with the first inlet;
providing a second inlet configured to receive a second fluid that includes a coolant;
providing a second outlet in fluid communication with the second inlet;
providing a first plate;
stacking a second plate on the first plate to define a first fluid channel between the first plate and the second plate, the first fluid channel providing fluid communication of the first fluid between the first inlet and the first outlet;
stacking a third plate on the second plate to define a second fluid channel between the second plate and the third plate, the second fluid channel providing fluid communication of the second fluid between the second inlet and the second outlet; and
placing a copper foil frame between the first plate and the second plate such that the copper foil frame extends around a perimeter of the second plate; and
brazing the first plate to the second plate where the copper foil frame provides a filler metal that couples the first plate to the second plate.

The method may further comprise bending a perimeter of the copper foil frame, and after bending the perimeter of the copper frame, punching an opening through the copper foil frame.

The first plate may include a base and a dome that extends from the base, wherein the dome includes an aperture extending through the dome, the aperture in fluid communication with the second inlet and the aperture provides a flow path for the second fluid, and wherein placing the copper foil frame between the first plate and the second plate includes placing the copper foil frame between the dome of the first plate and the second plate to provide a filler metal for brazing the dome of first plate to the second plate.

Other aspects of the invention will become apparent by consideration of the detailed description and accompanying drawings.

### BRIEF DESCRIPTION OF THE DRAWINGS

Fig. 1 is a perspective view of a heat exchanger according to one embodiment.
Fig. 2 is a cross-sectional view of the heat exchanger of Fig. 1 taken along line 2-2 of Fig. 1.
Fig. 3 is an enlarged view of a portion of Fig. 2.
Fig. 4 is a cross-sectional view of the heat exchanger of Fig. 1 taken along line 4-4 of Fig. 1.
Fig 5 is an enlarged view of a portion of Fig 4.
Fig. 6 illustrates a plate and a copper foil frame of the heat exchanger of Fig. 1.
Fig. 7 illustrates the copper foil frame of Fig. 6.
Fig. 8 is a cross-sectional view of a heat exchanger according to another embodiment.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

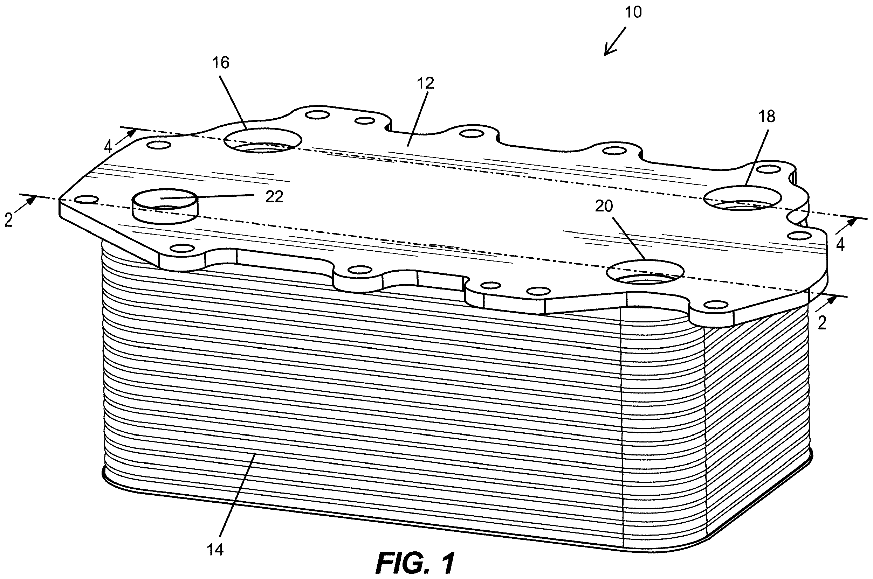

Fig. 1 illustrates a heat exchanger 10. In one embodiment, the heat exchanger 10 is a vehicle oil cooler and more particularly a layered core vehicle oil cooler. The heat exchanger 10 includes a base plate 12 and heat exchanger plates 14 stacked on the base plate 12. In one embodiment, the plates 12, 14 are formed from stainless steel. The base plate 12 can be used to mount or couple the heat exchanger 10 to a vehicle. The base plate 12 includes a first inlet 16 that receives a first fluid and a first outlet 18 in fluid communication and downstream from the first inlet 16. In one embodiment, the first fluid includes oil and relatively warm oil passes into the heat exchanger 10 through the inlet 16 and relatively cool oil exits the heat exchanger 10 via the outlet 18. The base plate 12 further includes a second inlet 20 that receives a second fluid and a second outlet 22 in fluid communication and downstream from the second inlet 20. In one embodiment, the second fluid includes a coolant that is used to cool the oil using the heat exchanger 10, as the first fluid and the second fluid are in thermal contact via thermal conduction through plate 14 arranged between the first fluid and the second fluid. In an alternative configuration, which is not shown, the first inlet 16 is arranged on an opposite long side from the first outlet 18, and the second inlet 20 or the second outlet 22 is arranged on the same long side as the first inlet 16. In another alternative embodiment, which is not shown, the first inlet 16 is on the same narrow side as the second inlet 20.

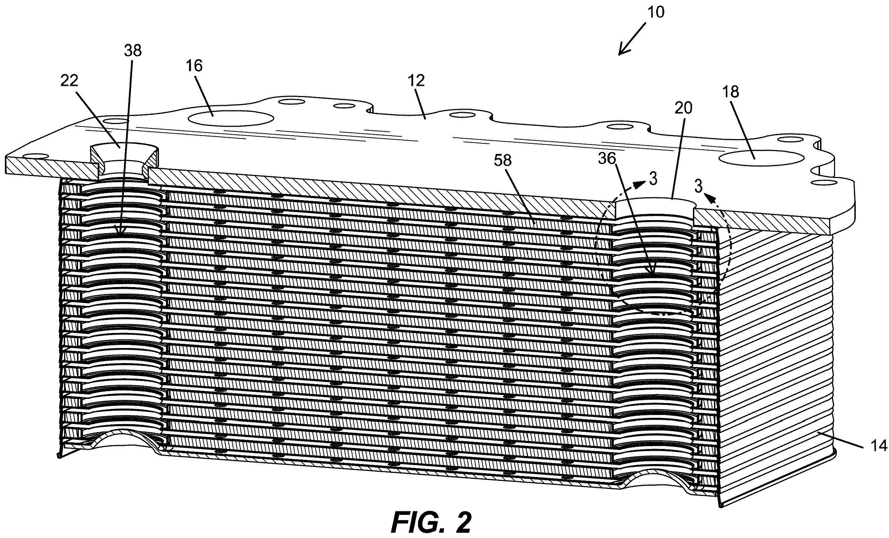

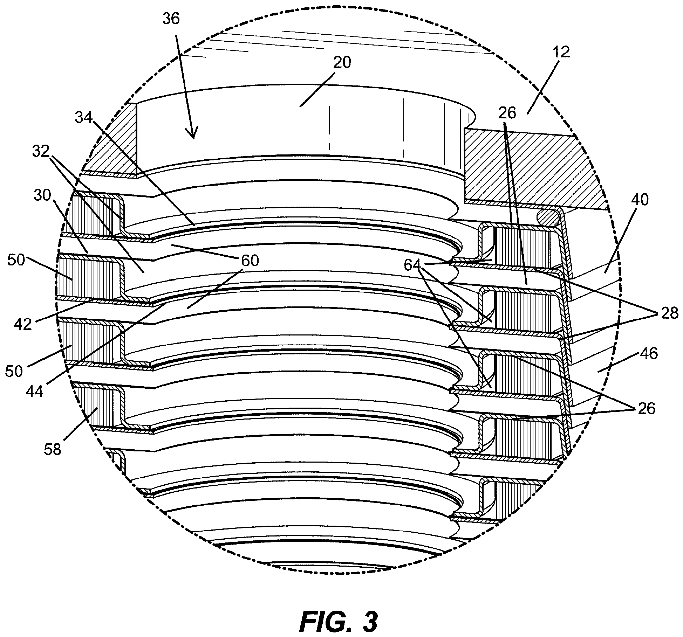

Referring to Figs. 2 and 3, the heat exchanger plates 14 include a first plate 26 and a second plate 28 that alternate in the sack of heat exchanger plates 14. The first plate 26 includes a base 30 and a dome 32 that extends from the base 30. The domes 32 each include an aperture 34 that extends through the dome 32. The apertures 34 aligned with the second or coolant inlet 20 form a coolant inlet manifold 36 of the heat exchanger 10. The apertures 34 aligned with the second or coolant outlet 22 form a coolant outlet manifold 38 of the heat exchanger 10. The first plate 26 further includes an outer wall or edge 40 that extends from the base 30 around the perimeter of the first plate 26.

The second plate 28 includes a base 42 and apertures 44 that extend through the base 42. The apertures 44 aligned with the coolant inlet 20 form the coolant inlet manifold 36 of the heat exchanger 10. The apertures 44 aligned with the coolant outlet 22 form the coolant outlet manifold 38 of the heat exchanger 10.. The second plate 28 further includes an outer wall or edge 46 that extends from the base 42 around the perimeter of the second plate 28. The edge 46 of the second plate 28 is received within the edge 40 of the first plate 26 to stack or nest the plates 26, 28.

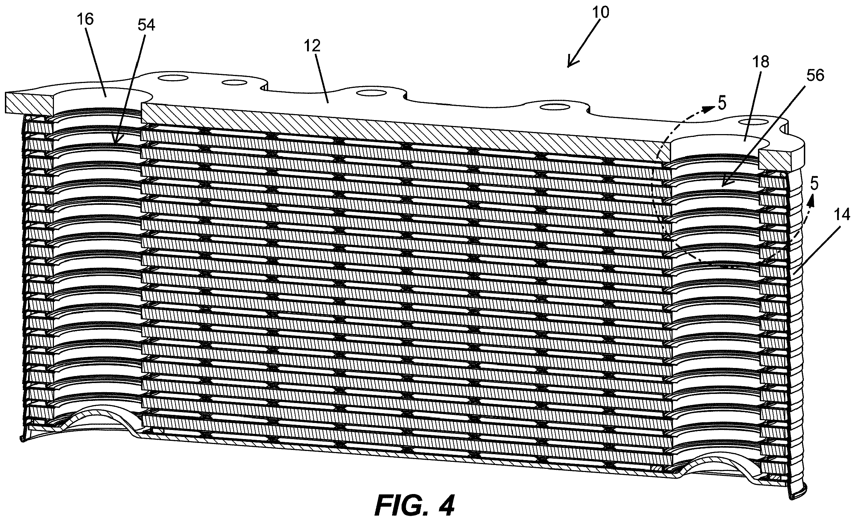

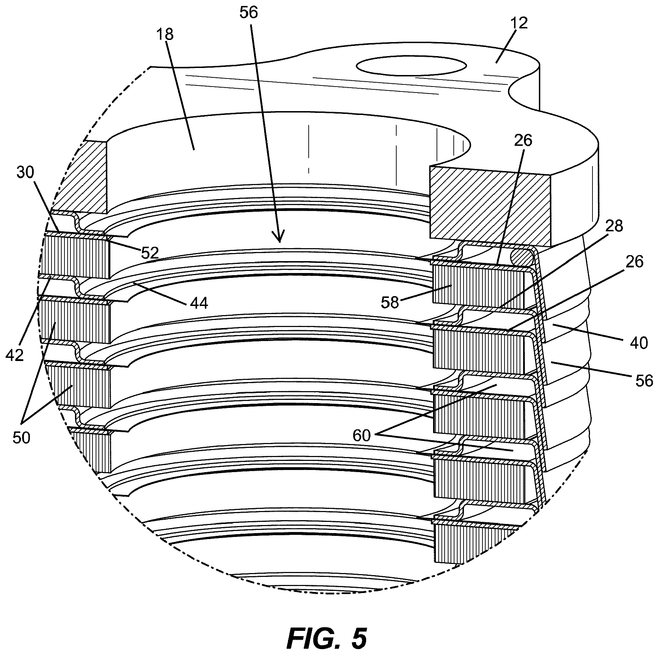

A first fluid channel 50 is formed between the first plate 26 and the second plate 28. The first fluid channels 50 provide fluid communication of the first fluid (e.g., oil) between the first inlet 16 and the first outlet 18. Referring to Figs. 4 and 5, apertures 52 in the first plate 26 aligned with the inlet 16 form an oil inlet manifold 54, and the aperture 52 aligned with the outlet 18 form an oil outlet manifold 56 of the heat exchanger 10. The oil inlet manifold 54 distributes oil to the first fluid channels 50 and the oil outlet manifold 56 collects oil from the channels 50 before directing the oil to the outlet 18.

In the illustrated embodiment, turbulators or fins 58 are located in the first fluid channels 50. The turbulators 58 provide turbulence to the flow in the channels 50 to increase heat transfer between the oil and coolant. In one method of manufacturing, an iron braze paste is applied partially in particular locations to the turbulators 58 to braze the turbulators 58 to the plates 26, 28.

Referring to Fig. 3, a third plate, which is another first plate 26 is stacked on the second plate 28 to define second or coolant fluid channels 60 between the plates 26, 28. The coolant fluid channels 60 provide fluid communication of the second fluid or coolant between the inlet 20 and the outlet 22. The coolant flows through the inlet 20 and into the coolant inlet manifold 36 where the coolant is distributed to the fluid channels 60. The coolant in the fluid channels 60 is used to cool the oil in the fluid channels 50 via heat transfer across the plates 26, 28. The coolant is received from the channels 60 into the coolant outlet manifold 38, and the coolant exits the heat exchanger 10 through the coolant outlet 22.

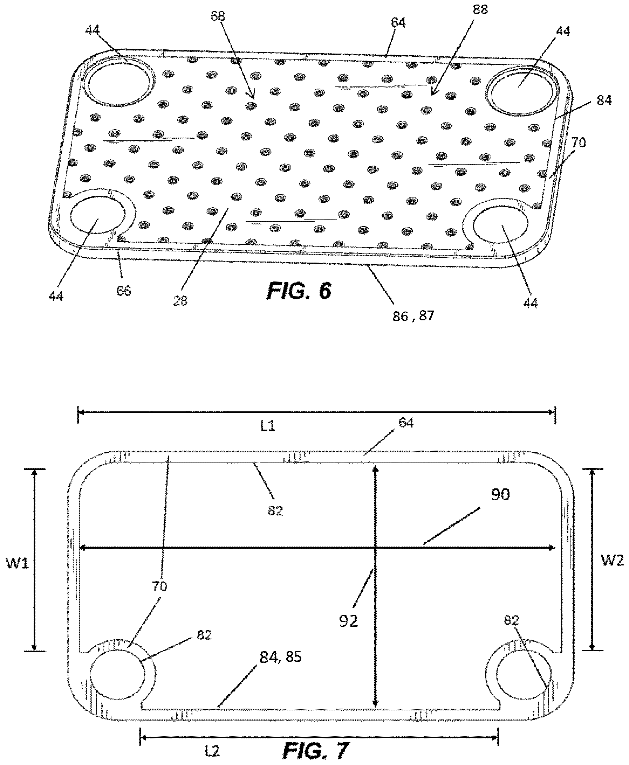

Referring to Figs. 3, 6, and 7, during the manufacturing process a copper foil frame 64 is placed between each first plate 26 and second plate 28. The copper foil frame 64 melts when the heat exchanger is placed in a braze furnace, which provides a filler metal for brazing and securing the first plate 26 to the second plate 28. The copper foil frame 64 extends only around a perimeter 66 of the plate (shown on second plate 28 in Fig. 6). That is, the copper material of the frame 64 does not extend into an interior region 68 of the plate 28. The copper foil frame 64 includes a only narrow strip 70 of copper foil that extends around the perimeter 66 of the plate 28. Also, the narrow strip 70 extends around the apertures 44 of the plate 28 that form the coolant manifolds 36, 38 such that the copper foil frame 64 is between the domes 32 of the first plate 26 and the base 42 of the second plate 28. This provides a filler metal for brazing the domes 32 to the second plates 28. The copper foil frame 64 is used in the first fluid or oil fluid channels 50 to braze the plates 26, 28. The construction of the frame 64 minimizes the amount of copper needed as filler metal to braze the plates 26, 28 together within the oil channels 60. Fluid like oil can break down copper over time and through use of the heat exchanger 10 and contact between the oil and copper. Therefore, it is desirable to minimize the amount of copper used in the oil fluid channels 50. The copper foil frame 64 includes the narrow strip 70 of copper foil that extends only around the perimeter 66 of the plate 28, which minimizes the use of copper in the oil channels 50 while still providing enough filler metal for brazing.

As shown in Figs. 6 and 7, the first fluid channel of the heat exchanger includes a center flow region 88 within the perimeter of the first fluid channel and between an inlet manifold opening and an outlet manifold opening. The copper braze frame 64 includes a frame base 84 and a frame wall 86 that extends from the frame base 84 at an angle of at least 20 degrees from the base 84. The frame base 84 includes an inner edge 85, and the frame wall includes an outer edge 87. The inner edge 85 surrounds and defines the area of the center flow region 88. The inner edge 85 extends in parallel to the outer edge 87 along the perimeter of the first fluid channel at locations W1, W2, L1, L2 where the perimeter is adjacent to the center flow region 88. A width 92 of the center flow region 88 at the widest point of the center flow region 88 is a separation distance between the inner edge 85 on one long side L1 of the frame and the inner edge 85 on another opposite long side L2 of the frame. A length 90 of the center flow region 88 at the longest point of the center flow region 88 is a separation distance between the inner edge 85 on one width side W1 of the frame and the inner edge 85 on another opposite width side W2 of the frame. A width dimension of the frame wall 86 is greater than or equal to a width dimension of the frame base 84 when measured at a point along one of the sides of the copper foil frame - the measurement being taken along a cross-section of the one of the sides of the frame at this point.

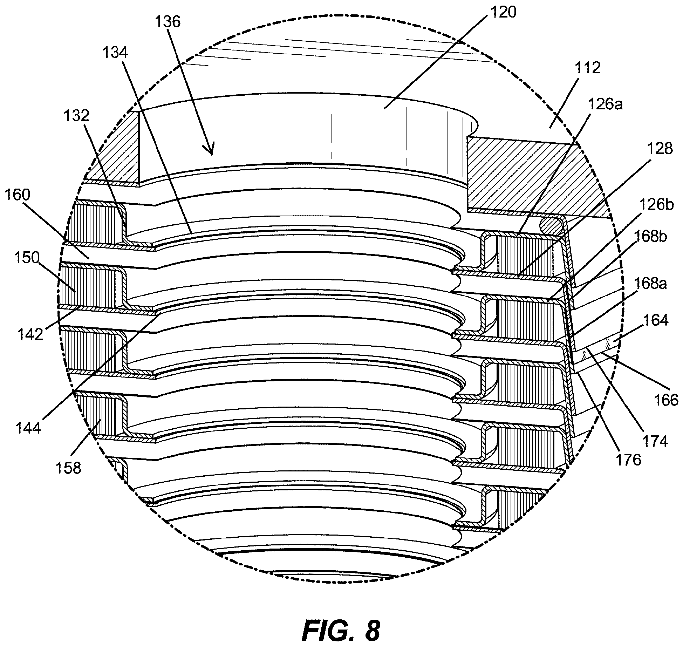

Fig. 8 illustrates an alternative embodiment of the invention of the heat exchanger as previously depicted Figs. 3, 6, and 7, where the braze joint between the first plate 126a and the second plate 128 is made by a braze foil sheet 164 of at least partially from copper and arranged between the second plate 128 and the third plate 126b, as shown in Fig. 8. Fig. 8 shows similar elements as Fig. 3. As shown in Fig. 3 above, the second plate 128 and the third plate 126b form the second fluid channel 160 therebetween. Therefore, in this embodiment, the copper-based filler material in the form of the braze foil sheet 164 is located in the coolant channel. In the embodiment of Fig. 8, the braze foil sheet 164 has an outer edge 166 that extends beyond an outer edge 174 of the second plate, covering at least a contact area between the second plate 128 and the third plate 126b. The outer edge 166 may be located between the outer edge 174 and an outer edge 176 of the third plate or may be located at the outer edge 176 of the third plate. During a brazing operation for the heat exchanger, the material of the braze sheet 164 melts to create a first braze joint 168a between the second plate 128 and the third plate 126b. Additionally, the material of the braze sheet 164 migrates on the outer of the heat exchanger to create a second braze joint 168b between the second plate 128 and the first plate 126a. This embodiment, therefore, further mitigates copper from the braze filler material from entering the first fluid channel and mixing with the first fluid, which may be oil.

In a further embodiment of Figs. 1-7, the heat exchanger 10 is manufactured by forming the first plate 26 and the second plate 28 with bent up side walls, forming the copper braze frame by bending the frame walls at an angle from frame base, and then after bending the frame walls, punching the openings into the frame base. After the first and second plates 26, 28 and the braze frame 64 are formed. The first and second plates 26, 28 are stacked by alternating the first plate 26 and the second plate 28 with a braze frame stacked between the first plate 26 and the second plate 28. Bending of the braze frame 64 before punching provides added rigidity to the braze frame 64 improving the punching operation and the assembly operation.

Various features and advantages of the invention are set forth in the following claims.

## Claims

1. A heat exchanger (10) comprising:
a first inlet (16) configured to receive a first fluid;
a first outlet (18) in fluid communication with the first inlet (16);
a second inlet (20) configured to receive a second fluid that includes a coolant;
a second outlet (22) in fluid communication with the second inlet (20);
a first plate (26);
a second plate (28) stacked on the first plate (26) to define a first fluid channel (50) between the first plate (26) and the second plate (28), the first fluid channel (50) providing fluid communication of the first fluid between the first inlet (16) and the first outlet (18);
a third plate stacked on the second plate (28) to define a second fluid channel (60) between the second plate (28) and the third plate, the second fluid channel (60) providing fluid communication of the second fluid between the second inlet (20) and the second outlet (22); and
a copper foil frame (64) between the first plate (26) and the second plate (28), the copper foil frame (64) configured to provide a filler metal for brazing the first plate (26) to the second plate (28), wherein the copper frame (64) extends around a perimeter of the second plate (28);
**characterised in that** the copper foil frame (64) comprises a frame base (84) with an inner edge (85), and a frame wall (86) with an outer edge (87), wherein the inner edge (85) surrounds and defines an area of a center flow region (88) within the first fluid channel (50), and wherein the inner edge (85) extends in parallel to the outer edge (87) at least partially around the center flow region (88).

2. The heat exchanger (10) of claim 1, wherein the first plate (26) includes a base (30) and a dome (32) that extends from the base (30), wherein the dome (32) includes a first plate aperture extending through the dome (32), the first plate aperture in fluid communication with the second inlet (20) and the first plate aperture provides a flow path for the second fluid, and wherein the copper foil frame (64) is located between the dome (32) of the first plate (26) and the second plate (28) to provide a filler metal for brazing the dome (32)of first plate (26) to the second plate (28).

3. The heat exchanger (10) of claims 1 or 2, wherein the copper foil frame (64) extends beyond an outer edge (87) of the second plate (28) and beyond an interface between the second plate (28) and the third plate.

4. The heat exchanger (10) of any preceding claim, further comprising a turbulator (58) in the first fluid channel (50) and an iron braze paste between the turbulator (58) and at least one of the first plate (26) and the second plate (28) for brazing the turbulator (58) to the at least one of the first plate (26) and the second plate (28).

5. The heat exchanger (10) of claim 1, wherein the frame wall (86) extends away from the frame base (84) at an angle greater than 20 degrees.

6. The heat exchanger (10) of claim 1, wherein a width dimension of the frame wall (86) is greater than or equal to a width dimension of the frame base (84) when measured along a cross-section of a side of the copper foil frame (64).

7. A method of manufacturing a heat exchanger (10), the method comprising:
providing a first inlet (16) configured to receive a first fluid;
providing a first outlet (18) in fluid communication with the first inlet (16);
providing a second inlet (20) configured to receive a second fluid that includes a coolant;
providing a second outlet (22) in fluid communication with the second inlet (20);
providing a first plate (26);
stacking a second plate (28) on the first plate (26) to define a first fluid channel (50) between the first plate (26) and the second plate (28), the first fluid channel (50) providing fluid communication of the first fluid between the first inlet (16) and the first outlet (18);
stacking a third plate on the second plate (28) to define a second fluid channel (60) between the second plate (28) and the third plate, the second fluid channel (60) providing fluid communication of the second fluid between the second inlet (20) and the second outlet (22); and
placing a copper foil frame (64) between the first plate (26) and the second plate (28) such that the copper foil frame (64) extends around a perimeter of the second plate (28), the copper foil frame (64) comprising a frame base (84) with an inner edge (85), and a frame wall (86) with an outer edge (87), wherein the inner edge (85) surrounds and defines an area of a center flow region (88) within the first fluid channel (50), and wherein the inner edge (85) extends in parallel to the outer edge (87) at least partially around the center flow region (88); and
brazing the first plate (26) to the second plate (28) where the copper foil frame (64) provides a filler metal that couples the first plate (26) to the second plate (28).

8. The method of manufacturing the heat exchanger (10) of claim 8, further comprising bending a perimeter of the copper foil frame (64), and after bending the perimeter of the copper frame, punching an opening through the copper foil frame (64).

9. The method of manufacturing the heat exchanger (10) of claims 8 or 9, wherein the first plate (26) includes a base (30) and a dome (32) that extends from the base (30), wherein the dome (32) includes a first plate aperture extending through the dome (32), the first plate aperture in fluid communication with the second inlet (20) and the first plate aperture provides a flow path for the second fluid, and wherein placing the copper foil frame (64) between the first plate (26) and the second plate (28) includes placing the copper foil frame (64) between the dome (32) of the first plate (26) and the second plate (28) to provide a filler metal for brazing the dome (32) of first plate (26) to the second plate (28).

## Patentansprüche

1. Wärmetauscher (10), umfassend:
einen ersten Einlass (16), der zum Empfangen eines ersten Fluids konfiguriert ist;
einen ersten Auslass (18), der mit dem ersten Einlass (16) in Fluidverbindung steht;
einen zweiten Einlass (20), der zum Empfangen eines zweiten, ein Kühlmittel einschließenden Fluids konfiguriert ist;
einen zweiten Auslass (22), der mit dem zweiten Einlass (20) in Fluidverbindung steht;
eine erste Platte (26);
eine zweite Platte (28), die auf der ersten Platte (26) gestapelt ist, um einen ersten Fluidkanal (50) zwischen der ersten Platte (26) und der zweiten Platte (28) zu definieren, wobei der erste Fluidkanal (50) eine Fluidverbindung des ersten Fluids zwischen dem ersten Einlass (16) und dem ersten Auslass (18) bereitstellt;
eine dritte Platte, die auf der zweiten Platte (28) gestapelt ist, um einen zweiten Fluidkanal (60) zwischen der zweiten Platte (28) und der dritten Platte zu definieren, wobei der zweite Fluidkanal (60) eine Fluidverbindung des zweiten Fluids zwischen dem zweiten Einlass (20) und dem zweiten Auslass (22) bereitstellt; und
einen Kupferfolienrahmen (64) zwischen der ersten Platte (26) und der zweiten Platte (28), wobei der Kupferfolienrahmen (64) so konfiguriert ist, dass er ein Füllmetall zum Hartlöten der ersten Platte (26) an die zweite Platte (28) bereitstellt, wobei sich der Kupferrahmen (64) um einen Umfang der zweiten Platte (28) herum erstreckt;
**dadurch gekennzeichnet, dass** der Kupferfolienrahmen (64) eine Rahmenbasis (84) mit einer inneren Kante (85) und eine Rahmenwand (86) mit einer äußeren Kante (87) umfasst, wobei die innere Kante (85) einen Bereich einer zentralen Strömungsregion (88) innerhalb des ersten Fluidkanals (50) umgibt und definiert, und wobei sich die innere Kante (85) parallel zu der äußeren Kante (87) mindestens teilweise um die zentrale Strömungsregion (88) herum erstreckt.

2. Wärmetauscher (10) nach Anspruch 1, wobei die erste Platte (26) eine Basis (30) und eine sich von der Basis (30) erstreckende Kuppel (32) einschließt, wobei die Kuppel (32) eine sich durch die Kuppel (32) erstreckende Öffnung der ersten Platte einschließt, wobei die Öffnung der ersten Platte mit dem zweiten Einlass (20) in Fluidverbindung steht und die Öffnung der ersten Platte einen Strömungspfad für das zweite Fluid bereitstellt, und wobei der Kupferfolienrahmen (64) sich zwischen der Kuppel (32) der ersten Platte (26) und der zweiten Platte (28) befindet, um ein Füllmetall zum Hartlöten der Kuppel (32) der ersten Platte (26) an die zweite Platte (28) bereitzustellen.

3. Wärmetauscher (10) nach Anspruch 1 oder 2, wobei sich der Kupferfolienrahmen (64) über eine äußere Kante (87) der zweiten Platte (28) sowie über eine Grenzfläche zwischen der zweiten Platte (28) und der dritten Platte hinaus erstreckt.

4. Wärmetauscher (10) nach einem der vorhergehenden Ansprüche, der ferner einen Turbulator (58) in dem ersten Fluidkanal (50) und eine Eisenlötpaste zwischen dem Turbulator (58) und mindestens einer von der ersten Platte (26) und der zweiten Platte (28) zum Hartlöten des Turbulators (58) an die mindestens eine von der ersten Platte (26) und der zweiten Platte (28) umfasst.

5. Wärmetauscher (10) nach Anspruch 1, wobei sich die Rahmenwand (86) in einem Winkel von mehr als 20 Grad von der Rahmenbasis (84) weg erstreckt.

6. Wärmetauscher (10) nach Anspruch 1, wobei eine Breitenabmessung der Rahmenwand (86) größer oder gleich einer Breitenabmessung der Rahmenbasis (84) ist, wenn sie entlang eines Querschnitts einer Seite des Kupferfolienrahmens (64) gemessen werden.

7. Verfahren zur Herstellung eines Wärmetauschers (10), wobei das Verfahren Folgendes umfasst:
Bereitstellen eines ersten Einlasses (16), der zum Empfangen eines ersten Fluids konfiguriert ist;
Bereitstellen eines ersten Auslasses (18), der mit dem ersten Einlass (16) in Fluidverbindung steht;
Bereitstellen eines zweiten Einlasses (20), der zum Empfangen eines zweiten, ein Kühlmittel einschließenden Fluids konfiguriert ist;
Bereitstellen eines zweiten Auslasses (22), der mit dem zweiten Einlass in Fluidverbindung (20) steht;
Bereitstellen einer ersten Platte (26);
Stapeln einer zweiten Platte (28) auf der ersten Platte (26), um einen ersten Fluidkanal (50) zwischen der ersten Platte (26) und der zweiten Platte (28) zu definieren, wobei der erste Fluidkanal (50) eine Fluidverbindung des ersten Fluids zwischen dem ersten Einlass (16) und dem ersten Auslass (18) bereitstellt;
Stapeln einer dritten Platte auf der zweiten Platte (28), um einen zweiten Fluidkanal (60) zwischen der zweiten Platte (28) und der dritten Platte zu definieren, wobei der zweite Fluidkanal (60) eine Fluidverbindung des zweiten Fluids zwischen dem zweiten Einlass (20) und dem zweiten Auslass (22) bereitstellt; und
Platzieren eines Kupferfolienrahmens (64) zwischen der ersten Platte (26) und der zweiten Platte (28), so dass sich der Kupferfolienrahmen (64) um einen Umfang der zweiten Platte (28) herum erstreckt, wobei der Kupferfolienrahmen (64) eine Rahmenbasis (84) mit einer inneren Kante (85) und eine Rahmenwand (86) mit einer äußeren Kante (87) umfasst, wobei die innere Kante (85) einen Bereich einer zentralen Strömungsregion (88) innerhalb des ersten Fluidkanals (50) umgibt und definiert, und wobei sich die innere Kante (85) parallel zu der äußeren Kante (87) mindestens teilweise um die zentrale Strömungsregion (88) herum erstreckt; und
Hartlöten der ersten Platte (26) an die zweite Platte (28), worin der Kupferfolienrahmen (64) ein Füllmetall bereitstellt, das die erste Platte (26) mit der zweiten Platte (28) koppelt.

8. Verfahren zur Herstellung des Wärmetauschers (10) nach Anspruch 8, das ferner das Biegen eines Umfangs des Kupferfolienrahmens (64) und nach dem Biegen des Umfangs des Kupferrahmens das Stanzen eines Durchgangs durch den Kupferfolienrahmen (64) umfasst.

9. Verfahren zur Herstellung des Wärmetauschers (10) nach Anspruch 8 oder 9, wobei die erste Platte (26) eine Basis (30) und eine sich von der Basis (30) erstreckende Kuppel (32) einschließt, wobei die Kuppel (32) eine sich durch die Kuppel (32) erstreckende Öffnung der ersten Platte einschließt, wobei die Öffnung der ersten Platte in Fluidverbindung mit dem zweiten Einlass (20) steht und die Öffnung der ersten Platte einen Strömungspfad für das zweite Fluid bereitstellt, und wobei das Platzieren des Kupferfolienrahmens (64) zwischen der ersten Platte (26) und der zweiten Platte (28) das Platzieren des Kupferfolienrahmens (64) zwischen der Kuppel (32) der ersten Platte (26) und der zweiten Platte (28) einschließt, um ein Füllmetall zum Hartlöten der Kuppel (32) der ersten Platte (26) an die zweite Platte (28) bereitzustellen.

## Revendications

1. Échangeur de chaleur (10) comprenant :
une première entrée (16) configurée pour recevoir un premier fluide ;
une première sortie (18) en communication fluidique avec la première entrée (16) ;
une deuxième entrée (20) configurée pour recevoir un deuxième fluide incluant un liquide de refroidissement ;
une deuxième sortie (22) en communication fluidique avec la deuxième entrée (20) ;
une première plaque (26) ;
une deuxième plaque (28) empilée sur la première plaque (26) pour définir un premier canal de fluide (50) entre la première plaque (26) et la deuxième plaque (28), le premier canal de fluide (50) assurant une communication fluidique du premier fluide entre la première entrée (16) et la première sortie (18) ;
une troisième plaque empilée sur la deuxième plaque (28) pour définir un deuxième canal de fluide (60) entre la deuxième plaque (28) et la troisième plaque, le deuxième canal de fluide (60) assurant une communication fluidique entre la deuxième entrée (20) et la deuxième sortie (22) à l'aide du deuxième fluide ; et
un cadre en feuille de cuivre (64) entre la première plaque (26) et la deuxième plaque (28), le cadre en feuille de cuivre (64) étant configuré pour fournir un métal d'apport permettant de braser la première plaque (26) à la deuxième plaque (28), le cadre de cuivre (64) s'étendant autour d'un périmètre de la deuxième plaque (28) ;
**caractérisé en ce que** le cadre en feuille de cuivre (64) comprend une base de cadre (84) dotée d'un bord intérieur (85), et une paroi de cadre (86) dotée d'un bord extérieur (87), le bord intérieur (85) entourant et définissant une zone d'une région d'écoulement centrale (88) à l'intérieur du premier canal de fluide (50), et le bord intérieur (85) s'étendant parallèlement au bord extérieur (87) au moins partiellement autour de la région d'écoulement centrale (88).

2. Échangeur de chaleur (10) selon la revendication 1, dans lequel la première plaque (26) inclut une base (30) et un dôme (32) qui s'étend à partir de la base (30), le dôme (32) incluant une ouverture de première plaque s'étendant à travers le dôme (32), l'ouverture de première plaque étant en communication fluidique avec la deuxième entrée (20) et l'ouverture de première plaque fournissant un trajet d'écoulement pour le deuxième fluide, et le cadre en feuille de cuivre (64) étant situé entre le dôme (32) de la première plaque (26) et la deuxième plaque (28) pour fournir un métal d'apport permettant de braser le dôme (32) de la première plaque (26) à la deuxième plaque (28).

3. Échangeur de chaleur (10) selon les revendications 1 ou 2, dans lequel le cadre en feuille de cuivre (64) s'étend au-delà d'un bord extérieur (87) de la deuxième plaque (28) et au-delà d'une interface entre la deuxième plaque (28) et la troisième plaque.

4. Échangeur de chaleur (10) selon l'une quelconque des revendications précédentes, comprenant en outre un turbulateur (58) dans le premier canal de fluide (50) et une pâte de brasure au fer entre le turbulateur (58) et au moins une de la première plaque (26) et de la deuxième plaque (28) pour braser le turbulateur (58) à l'au moins une de la première plaque (26) et de la deuxième plaque (28).

5. Échangeur de chaleur (10) selon la revendication 1, dans lequel la paroi de cadre (86) s'étend à l'écart de la base de cadre (84) selon un angle supérieur à 20 degrés.

6. Échangeur de chaleur (10) selon la revendication 1, dans lequel une dimension de largeur de la paroi de cadre (86) est supérieure ou égale à une dimension de largeur de la base de cadre (84), mesurées le long d'une section transversale d'un côté du cadre en feuille de cuivre (64).

7. Procédé de fabrication d'un échangeur de chaleur (10), le procédé comprenant les étapes consistant à :
fournir une première entrée (16) configurée pour recevoir un premier fluide ;
fournir une première sortie (18) en communication fluidique avec la première entrée (16) ;
fournir une deuxième entrée (20) configurée pour recevoir un deuxième fluide incluant un liquide de refroidissement ;
fournir une deuxième sortie (22) en communication fluidique avec la deuxième entrée (20) ;
fournir une première plaque (26) ;
empiler une deuxième plaque (28) sur la première plaque (26) pour définir un premier canal de fluide (50) entre la première plaque (26) et la deuxième plaque (28), le premier canal de fluide (50) assurant une communication fluidique du premier fluide entre la première entrée (16) et la première sortie (18) ;
empiler une troisième plaque sur la deuxième plaque (28) pour définir un deuxième canal de fluide (60) entre la deuxième plaque (28) et la troisième plaque, le deuxième canal de fluide (60) assurant une communication fluidique du deuxième fluide entre la deuxième entrée (20) et la deuxième sortie (22) ; et
placer un cadre en feuille de cuivre (64) entre la première plaque (26) et la deuxième plaque (28) de telle façon que le cadre en feuille de cuivre (64) s'étend autour d'un périmètre de la deuxième plaque (28), le cadre en feuille de cuivre (64) comprenant une base de cadre (84) dotée d'un bord intérieur (85), et une paroi de cadre (86) dotée d'un bord extérieur (87), le bord intérieur (85) entourant et définissant une zone d'une région d'écoulement centrale (88) à l'intérieur du premier canal de fluide (50), et le bord intérieur (85) s'étendant parallèlement jusqu'au bord extérieur (87) au moins partiellement autour de la région d'écoulement centrale (88) ; et
braser la première plaque (26) à la deuxième plaque (28), le cadre en feuille de cuivre (64) fournissant un métal d'apport qui couple la première plaque (26) à la deuxième plaque (28).

8. Procédé de fabrication de l'échangeur de chaleur (10) selon la revendication 8, comprenant en outre le pliage d'un périmètre du cadre en feuille de cuivre (64), et après le pliage du périmètre du cadre en cuivre, la perforation d'une ouverture à travers le cadre en feuille de cuivre (64).

9. Procédé de fabrication de l'échangeur de chaleur (10) selon les revendications 8 ou 9, dans lequel la première plaque (26) inclut une base (30) et un dôme (32) qui s'étend à partir de la base (30), le dôme (32) comprenant une ouverture de première plaque s'étendant à travers le dôme (32), l'ouverture de première plaque étant en communication fluidique avec la deuxième entrée (20) et l'ouverture de première plaque fournissant un trajet d'écoulement pour le deuxième fluide, et dans lequel la placement du cadre en feuille de cuivre (64) entre la première plaque (26) et la deuxième plaque (28) inclut le placement du cadre en feuille de cuivre (64) entre le dôme (32) de la première plaque (26) et la deuxième plaque (28) pour fournir un métal d'apport permettant de braser le dôme (32) de la première plaque (26) à la deuxième plaque (28).
